# FASCICULE DE BREVET EUROPEEN

(11) **EP 1 075 928 B1**
(45) Date de publication et mention de la délivrance du brevet: **21.04.2004**
(21) Numéro de dépôt: 00116694.1
(22) Date de dépôt: 02.08.2000
(51) Int. Cl.: B29D 30/12, B29C 33/48, B29C 33/30

(54) **Noyau rigide pour la fabrication de pneumatiques, comportant une jante de solidarisation**
Steifer Kern zur Herstellung von Luftreifen, enthaltend eine Befestigungsfelge
Rigid core for manufacturing tires, comprising a securing rim

(30) Priorité: 10.08.1999 FR 9910421
(43) Date de publication de la demande: 14.02.2001
(73) Titulaire: SEDEPRO, F-75015 Paris (FR)
(72) Inventeur: Legagneur, Alain, 63200 Mozac (FR); Mayet, Jean-Claude, 63000 Clermont-Ferrand (FR); Torres, Miguel, 63122 Ceyrat (FR)
(74) Mandataire: Bauvir, Jacques

(56) Documents cités:
- EP-A- 0 666 165
- US-A- 1 810 072
- US-A- 1 903 458
- US-A- 3 922 123
- US-A- 4 083 672
- US-A- 4 140 454
- US-A- 4 877 468

## Description

La présente invention concerne la fabrication des pneumatiques. Plus particulièrement, la présente invention est relative à un noyau sensiblement rigide utilisé comme support de fabrication d'un pneumatique et comme moyen de moulage de la surface de la cavité intérieure d'un pneumatique.

La demande de brevet EP 0 666 165 décrit une machine de fabrication de pneumatiques qui utilise un tel noyau comme support d'un pneumatique du début à la fin de sa fabrication. On sait qu'un tel noyau est constitué de plusieurs fractions afin de pouvoir être extrait de l'intérieur d'un pneumatique par le volume disponible à l'intérieur des bourrelets, puis est reconstitué pour servir de support pour la fabrication ultérieure d'un autre pneumatique. Un tel noyau doit résister à de nombreux cycles de montage et démontage. Le noyau doit être d'une très grande robustesse afin de pouvoir garantir un haut niveau de qualité géométrique, ainsi qu'une grande pérennité dans le temps des qualités géométriques malgré les nombreuses manipulations dont il est l'objet. Le noyau est déplacé de poste en poste au sein de la machine par deux préhenseurs qui en assurent la manipulation. On sait par ailleurs que, dans une forme de réalisation pratique, un tel noyau est constitué par plusieurs fractions qui sont maintenues assemblées par une jante pendant la fabrication du pneumatique.

Il en résulte différentes contraintes de conception. Notamment, le noyau doit être aisément manipulable puisqu'il est transporté de poste en poste sur cette machine. En outre, son démantèlement et sa reconstitution doivent être aussi simples et rapides que possible pour ne pas pénaliser le temps de cycle de la machine. En d'autres termes, le nombre d'opérations élémentaires à réaliser concernant le noyau pendant un cycle de fabrication complet d'un pneumatique devra être aussi réduit que possible, principalement lorsqu'il s'agit d'opérations non réalisables en temps masqué, c'est à dire pendant le déroulement d'autres opérations directement productives pour l'obtention d'un pneumatique.

Les documents US-A-4 083 672 et US-A-1 903 458 décrivent des noyaux correspondant au préambule de la revendication 1. Cependant, ils proposent que les fractions du noyau soient retenues par une jante en deux moitiés axialement séparables.

L'objectif de la présente invention est de proposer un noyau qui soit à la fois très aisément manipulable dans une machine telle que décrite dans la demande de brevet EP 666 165.

L'invention propose un noyau définissant au moins partiellement une forme de fabrication pour la surface intérieure d'un pneumatique, ledit noyau étant destiné à coopérer avec au moins un préhenseur indépendant dudit noyau, le noyau comportant :
- une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, une partie d'accrochage étant agencée à l'extrémité radialement intérieure de chacune des fractions,
- une jante continue circonférentiellement, disposée radialement sous chacune des fractions, pour les supporter, les centrer et les relier,
- au moins une portée d'accrochage côté fraction, agencée sur la partie d'accrochage de chacune des fractions, et au moins une portée d'accrochage côté jante, complémentaire à la portée d'accrochage côté fraction, agencée sur la jante,
caractérisé en ce que :
- la jante est monobloc axialement,
- lesdites au moins une portée d'accrochage côté fraction et au moins une portée d'accrochage côté jante coopérant pour, en position de blocage et pour chaque fraction, empêcher tout mouvement radial de la fraction considérée par rapport à la jante,
- l'ensemble desdites au moins une portée d'accrochage côté fraction et portée d'accrochage côté jante sont agencées de façon à permettre un mouvement axial relatif de la jante par rapport aux fractions dans un sens seulement
- l'ensemble desdites au moins une portée d'accrochage côté fraction comporte un portée d'accrochage correspondante côté jante monobloc axialement.

L'invention s'étend aussi à un ensemble comportant un tel noyau et un préhenseur comportant des moyens de blocage étant prévus sur le préhenseur pour immobiliser axialement seulement les fractions sur la jante. L'invention propose aussi un procédé de montage selon la revendication 19, un procédé de manipulation selon la revendication 20, un procédé de fabrication selon la revendication 21 et un procédé de démontage selon la revendication 22.

Dans le présent mémoire, on appelle « portée d'accrochage côté jante » une portée d'accrochage située sur la jante. C'est donc une surface appartenant à la jante. On appelle « portée d'accrochage côté fraction » une portée d'accrochage située sur une fraction. C'est donc une surface appartenant à une fraction.

Le noyau que propose la présente invention ne comporte pas en lui-même (c'est à dire dans l'ensemble fractions et jantes) l'ensemble des pièces ou des éléments nécessaires pour assurer sa tenue à l'état monté. Une partie des moyens nécessaires pour assurer ladite tenue à l'état monté d'un tel noyau est reportée sur le ou les préhenseurs de ce noyau. De cette façon, la manipulation complète du noyau s'en trouve considérablement simplifiée. Le préhenseur peut assurer le centrage de la jante ou des fractions, et la fonction d'immobilisation axiale des fractions sur et par rapport à la jante. L'immobilisation radiale des fractions sur le noyau (pour éviter la centrifugation des fractions) est assurée par les portées d'accrochage côté fraction et côté jante. Celles-ci bloquent axialement le mouvement relatif entre fractions et jante dans un sens seulement, l'autre sens ne pouvant être bloqué sans l'intervention du préhenseur. Quant au rôle du préhenseur dans l'immobilisation radiale relative des fractions par rapport à la jante, il n'est qu'indirect. Si les fractions ne sont pas bloquées sur la jante, alors bien entendu rien ne les empêche de se déplacer, y compris radialement, puisqu'elles sont libres. En effet, la jante est insuffisante pour solidariser les différentes pièces constitutives du noyau. C'est la raison pour laquelle il a été précisé que c'est en position de blocage que les portées d'accrochage coopèrent pour empêcher tout mouvement radial de la fraction considérée par rapport à la jante. Mais le préhenseur ne comporte pas de dispositions visant à aider les portées d'accrochage à reprendre des efforts tendant à séparer radialement les fractions par rapport à la jante. Son rôle est de bloquer axialement le mouvement des fractions par rapport à la jante dans le sens laissé libre par la configuration des pièces du noyau lui-même.

En outre, l'invention permet de réaliser un noyau comportant un nombre minimum de pièces différentes. On entend ici par pièces « différentes » des pièces qui se trouvent individualisées fonctionnellement à un moment ou à un autre de l'utilisation du noyau, c'est à dire manipulées séparément. Bien entendu, cela n'exclut pas que certaines de ces différentes pièces soient elles-mêmes l'assemblage de différents constituants comme on le verra par exemple pour chacune des fractions. Mais dans ce dernier cas, le nombre de constituants peut être quelconque ; cela reste sans conséquence sur les différentes manipulations dont le noyau est l'objet, sans conséquence sur le temps de ces manipulations et sans conséquence sur leur complexité.

On voit que le noyau selon l'invention comporte donc autant de pièces différentes qu'il y a de fractions, plus une pièce de liaison, à savoir la jante. Dans l'exemple de réalisation décrit ci-dessous, on verra que le noyau comporte dix fractions et une jante, soit onze pièces au total à manipuler au cours de chaque cycle de fabrication d'un pneumatique. Ce nombre réduit de pièces à manipuler facilite grandement le démantèlement et la reconstitution du noyau, sans pénaliser les manipulations de celui-ci aux différents postes de la machine.

Dans le contexte de la présente invention, on appelle « préhenseur » tout type d'organes qui est capable de s'agripper au noyau et de le supporter, comme par exemple les potences au sens donné à ce mot dans la demande de brevet EP 0 666 165, ou celui qui en assure la prise dans l'emboîteuse au moment de la vulcanisation, mais aussi tout type d'organes qui est capable de s'agripper au noyau, de le supporter et le mettre en rotation, comme par exemple le dispositif qui assure la prise du noyau au poste de confection du pneumatique.

Suivant une caractéristique de la présente invention, non seulement le préhenseur assure la prise de la jante pour transporter le noyau ou pour le mettre en rotation comme par exemple au poste de confection du pneumatique, mais il assure également le centrage et le blocage des différentes pièces constitutives du noyau en assurant l'immobilisation axiale relative entre les fractions et la jante. Le fait d'avoir donné à certains organes du préhenseur une fonction pour assurer la tenue à l'état monté du noyau permet de simplifier ce noyau en réduisant le nombre de pièces, sans compliquer à l'excès les préhenseurs dudit noyau.

L'invention permet notamment de réaliser un noyau que l'on peut prendre et manipuler par chacun de ses deux côtés axialement, comme cela est requis pour une utilisation dans une machine telle que décrite par la demande de brevet EP 0 666 165. Cela permet d'éviter de devoir déposer provisoirement le noyau par sa surface de moulage, c'est à dire la surface des parties dites principales dans la suite de la description. La jante est capable d'être prise en même temps par deux préhenseurs différents. La jante comprend au moins deux zones de prise, chacune permettant d'assurer le centrage et support de la jante sur un préhenseur différent. La prise par chaque préhenseur sur une zone de prise sur la jante permet d'assurer le centrage et support de la jante sur le préhenseur avant déploiement des moyens de blocage. Cette prise possible par les deux côtés, par deux préhenseurs différents, permet aussi une grande robustesse du noyau, comme on va l'expliquer dans la suite. Il y a au moins deux zones de prises ou deux ensembles de zones de prise aménagés sur la jante, chacune pour des préhenseurs différents.

En effet, suivant un autre aspect, le noyau est de préférence rendu aussi léger que possible afin de ne pas alourdir à l'excès les autres organes de la machine, et particulièrement les préhenseurs qui sont mobiles. C'est pourquoi on utilise un alliage léger pour la construction de la plus grande part possible dudit noyau. Et afin d'assurer une très grande robustesse du noyau, la partie qui est l'objet de différents accostages pour assurer le montage et le démontage ainsi que le transport du noyau est réalisée métal dur, par exemple en acier.

Pouvoir changer la prise du noyau en le tenant pendant une phase transitoire par les deux côtés à la fois constitue aussi un avantage appréciable de l'invention. A cet égard, et plus particulièrement pour les phases de montage et de démontage du noyau, il est avantageux que lesdites portée d'accrochage côté fraction et portée d'accrochage côté jante soient conformées de façon à permettre un mouvement axial relatif de la jante par rapport à l'ensemble des fractions dans un sens seulement. La disposition constructive évoquée ci-dessus est très intéressante.

D'autres détails et avantages de l'invention sont expliqués dans la suite, à consulter en parallèle des figures jointes, sur lesquelles :

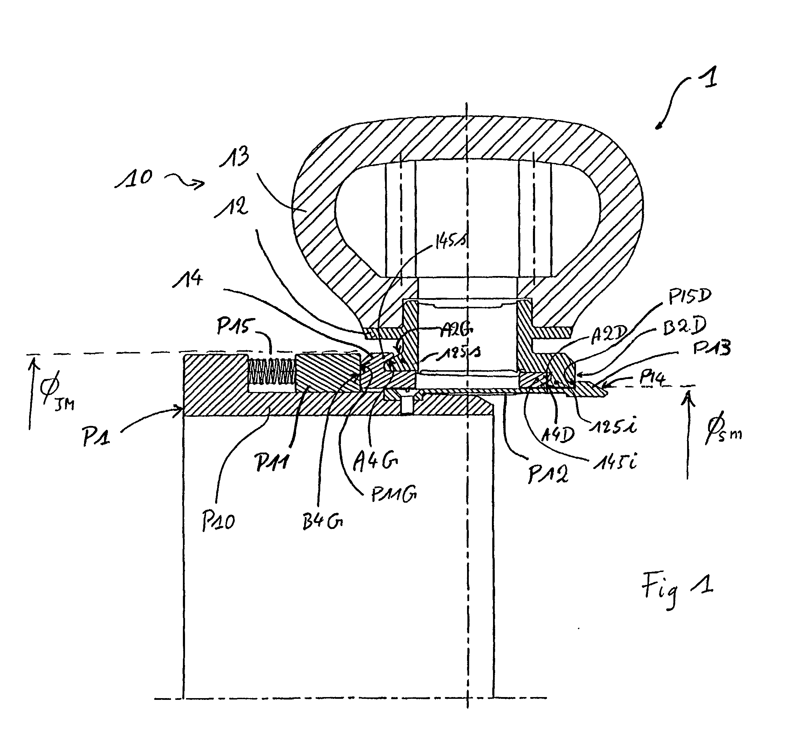

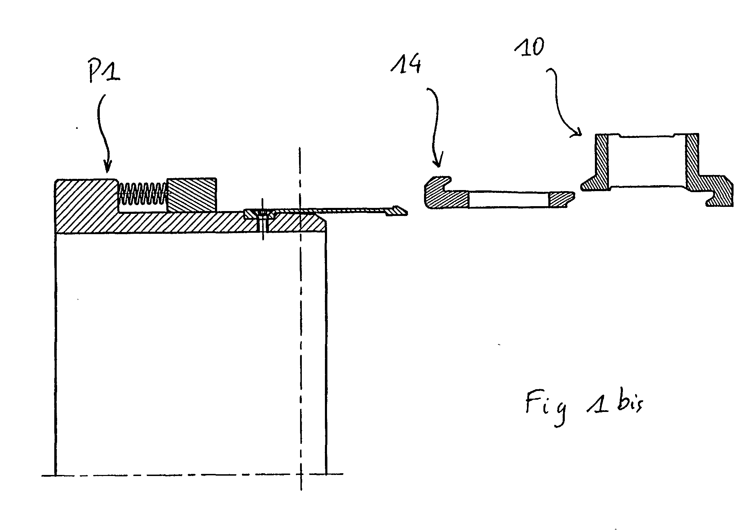

- La figure 1 montre un premier préhenseur en contact avec le noyau ;
- La figure 1bis montre le premier préhenseur écarté du noyau et, pour le noyau, la jante écartée des fractions ;
- La figure 2 est une vue dans un plan perpendiculaire à l'axe du noyau ;
- La figure 3 montre un deuxième préhenseur en contact avec le noyau ;
- La figure 4a montre un troisième préhenseur en contact avec le noyau ;
- La figure 4b montre le même troisième préhenseur, dans une configuration différente ;
- La figure 5a montre un manipulateur approchant d'une fraction du noyau ;
- La figure 5b montre le manipulateur en contact avec une fraction du noyau ;
- La figure 5c montre le manipulateur verrouillé sur une fraction du noyau ;
- La figure 5d montre le manipulateur supportant une fraction du noyau ;
- La figure 6 est une coupe selon AA à la figure 5a ;
- La figure 7 est une coupe selon BB à la figure 5a ;
- La figure 8 est une coupe selon CC à la figure 5a ;
- La figure 9 est une coupe selon DD à la figure 5a ;
- La figure 10 est une vue de bout du manipulateur.

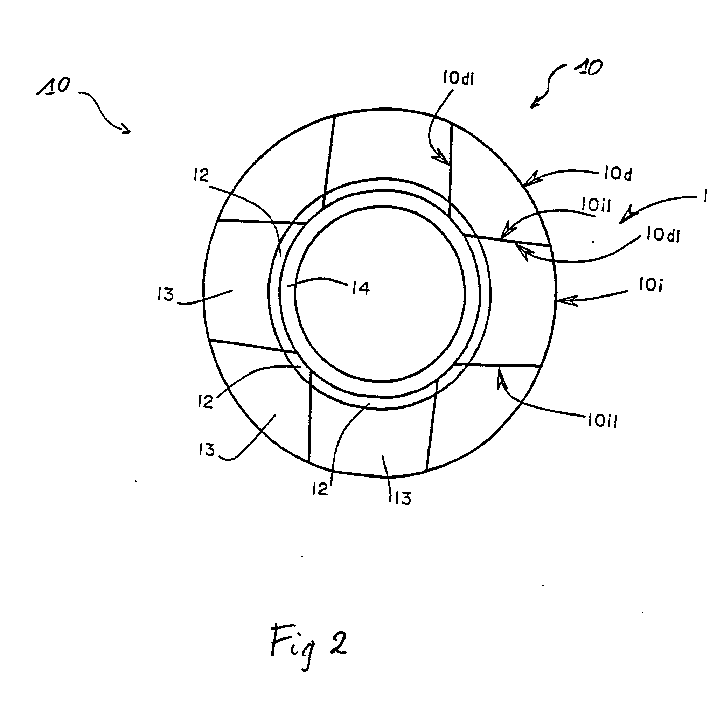

Aux figures 1 et 2, on voit un noyau rigide 1 définissant au moins partiellement une forme de fabrication pour la surface intérieure d'un pneumatique. Ce noyau 1 est destiné à coopérer avec au moins un premier préhenseur dudit noyau. Il comporte une pluralité de fractions 10d, 10i adjacentes circonférentiellement, disposées côte à côte en contact les unes contre les autres par leurs faces transversales 10d1 et 10i1. Les faces transversales 10i1 d'au moins une fraction 10i sont convergentes à l'extérieur du noyau, afin de permettre le démontage dudit noyau en enlevant cette fraction radialement par l'intérieur. En pratique et comme dessiné dans la demande de brevet EP 0 242 840 ainsi que dans la présente demande, le noyau comporte deux modèles de fractions : des fractions divergentes 10d, dont les faces transversales 10d1 sont divergentes radialement à l'extérieur du noyau, et des fractions dites « inversées » 10i, dont les faces transversales 10i1 sont convergentes à l'extérieur du noyau. Dans la suite, les fractions seront désignées en omettant le suffixe i ou d, par exemple « fraction 10 », lorsque leur caractère divergent ou inversé est sans importance pour l'aspect technique traité.

Chacune desdites fractions 10 comporte une partie d'accrochage 12 à une jante 14, ladite partie d'accrochage 12 étant agencée à l'extrémité radialement intérieure de chacune des fractions. On voit à la figure 2 que la jante 14 est continue circonférentiellement et est ici réalisée de façon monobloc. En revanche, les parties d'accrochage 12, puisqu'elles font partie des fractions 10, ne se développent chacune que sur une portion de cercle. Ladite partie d'accrochage 12 est réalisée en un premier matériau choisi pour son aptitude à supporter un grand nombre de cycles de montage et de démontage. Chacune desdites fractions 10 comporte une partie principale 13 complémentaire à ladite partie d'accrochage 12, dont la fonction essentielle est de définir une surface de fabrication pour le pneumatique. Cette partie principale 13 est réalisée avantageusement, mais non nécessairement, en un second matériau différent du premier matériau, ledit second matériau étant choisi pour son aptitude à être moulé, sa bonne conductibilité thermique et sa légèreté, ladite partie principale étant rendue solidaire de ladite partie d'accrochage 12, c'est à dire non démontable fonctionnellement. On va typiquement utiliser un métal comme l'acier pour réaliser la partie d'accrochage et l'acier sera usiné de façon à obtenir toutes les portées et les formes voulues pour cette partie d'accrochage en fonction des finalités d'accrochage et de manipulations du noyau. On va typiquement utiliser un alliage léger coulé comme un alliage d'aluminium pour la partie principale. Cela permet de surmouler, c'est à dire de noyer des résistances électriques à l'intérieur de la paroi formant le dôme radialement extérieur de chaque partie principale. On utilise donc un matériau coulable et bon conducteur thermiquement, moulé avec au moins une résistance électrique par fraction, noyée à l'intérieur de la paroi formant le dôme radialement extérieur de chaque partie principale. Comme le noyau doit pouvoir être transporté de poste en poste sur une machine de fabrication de pneumatiques, on prévoit soit un connecteur qui permette, lors de l'accostage à un préhenseur sur un poste approprié (poste de préchauffe, poste de vulcanisation), de raccorder le noyau au poste de vulcanisation de la machine pour alimenter les résistances en énergie électrique et éventuellement pour pouvoir connecter des sondes de mesures diverses, soit on prévoit dans le même but des moyens de couplage inductif et/ou tout autre moyen de couplage usuel.

De préférence, en considérant l'ensemble des fractions, le dimensionnement et la configuration de la partie principale, de la partie d'accrochage, et de la liaison de la partie principale à la partie d'accrochage sont tels que, à la température de vulcanisation du caoutchouc, les parties principales sont en contact à jeu nul les unes contre les autres et présentent une surface de moulage régulière, sans ressaut entre fractions adjacentes, alors que, aux températures inférieures à la température de vulcanisation, des jeux apparaissent entre les parties principales.

Selon un aspect de l'invention, chaque fraction comporte au moins une portée d'accrochage côté fraction agencée sur la partie d'accrochage de chacune des fractions, et une portée d'accrochage côté jante complémentaire à la portée d'accrochage côté fraction, lesdites portées d'accrochage étant agencées pour reprendre, radialement, les efforts tendant à séparer radialement les fractions par rapport à la jante. En outre, le noyau comporte des portées de blocage orientées radialement, agencées respectivement sur la jante et sur chacune des fractions. Lesdites portées de blocage sont destinées à coopérer avec au moins un organe de blocage escamotable, supporté par ledit préhenseur afin d'immobiliser l'ensemble des fractions sur la jante. Les portées d'accrochage côté jante et côté fractions constituent, avec les portées de blocage et avec le préhenseur associé, un système capable de pincer sans jeu le noyau sur le préhenseur.

A la figure 1, on voit que la fraction 10 comporte une première portée d'accrochage côté fraction A2G et une deuxième portée d'accrochage côté fraction A2D, agencées sur la partie d'accrochage de chacune des fractions, axialement séparées l'une de l'autre. La jante 14 comporte une portée d'accrochage côté jante A4G et une portée d'accrochage côté jante A4D, complémentaires respectivement aux portées d'accrochage côté fraction A2G et A2D. Le noyau comporte des portées de blocage, l'une B4G agencée sur la jante et l'autre B2D agencée sur une fraction 10. Chacune des fractions 10 comporte une portée de blocage B2D semblable.

Chaque fraction 10 comporte deux becs 125s et 125i agencés circonférentiellement, disposés axialement de part et d'autre dudit plan médian virtuel perpendiculaire à l'axe du noyau 1. L'un d'eux, dit « bec inférieur » 125i est disposé radialement à un niveau inférieur à l'autre, dit « bec supérieur » 125s. Chaque portée d'accrochage côté fraction A2G et A2D apparaît sur l'un des becs 125s et 125i. Les portées d'accrochage côté fraction A2G et A2D sont donc elles-mêmes disposées axialement de part et d'autre d'un plan médian perpendiculaire à l'axe du noyau 1. La jante 14 présente des becs 145s et 145i en regard des becs 125s et 125i de fractions, en position de montage.

Chacune des portées d'accrochage côté fraction et portées d'accrochage côté jante est disposée sur un bec agencé circonférentiellement. Chacune des portées d'accrochage côté fraction A2G et A2D est dans cet exemple une surface tronconique, les surfaces tronconiques de la portée d'accrochage côté fraction sur le bec inférieur et de la portée d'accrochage côté fraction sur le bec supérieur étant orientées axialement du même côté.

Les moyens de blocage pour immobiliser les fractions sur la jante comprennent des portées de blocage indépendantes des portées d'accrochage et agencées sur les fractions, lesdites portées de blocage étant destinées à coopérer avec au moins un organe de blocage indépendant des portées d'accrochage et supporté par ledit préhenseur, ledit organe de blocage étant déployable pour coopérer avec au moins une portée de blocage agencée sur les fractions afin d'immobiliser les fractions sur la jante, ledit organe de blocage étant escamotable pour libérer lesdites fractions.

On voit un préhenseur P1, comportant une virole P10. A la figure 1bis, on a représenté la jante 14 (vue en coupe radiale) séparée axialement des fractions 10 (dont une est vue en coupe radiale) pour bien illustrer que la jante est une pièce mécanique différente de chacune des fractions, dont elle peut être désolidarisée pour le démontage du noyau (voir explication du démontage ci-dessous). A la figure 1bis, on a également représenté le préhenseur P1 (illustré en demi-vue) séparé axialement de la jante 14 pour bien illustrer que le préhenseur P1 (comme tout autre préhenseur proposé par la présente invention) est une pièce mécanique différente de la jante 14.

La virole P10 comporte une rondelle d'appui P11 dont une face latérale, comprise dans un plan perpendiculaire à l'axe du noyau, constitue une portée de blocage P11G. Un ressort P15 tend à repousser la rondelle d'appui P11 axialement vers la droite de la figure 1. Le préhenseur P1 comporte autant de lames de verrouillage P12 que le noyau compte de fractions 10. Les lames de verrouillage P12 sont montées vers l'extrémité libre de la virole P10 ; elles sont orientées axialement et sont en porte-à-faux par rapport à la virole P10. Elles sont légèrement flexibles radialement pour un raison qui apparaîtra dans la suite. Les lames de verrouillage P12 sont terminées par un renflement P13, dont l'extrémité axiale et radialement supérieure forme un chanfrein P14. Le renflement P13 comporte un bossage ayant une portée de blocage P15D. Toutes les portées de blocage sont des portées planes comprises dans des plans perpendiculaires à l'axe. En ce qui concerne chaque fraction 10, la ou lesdites portées planes B2D sont situées sur le bec 125i axialement en sens opposé à la composante axiale de l'orientation des portées tronconiques côté fraction A2D. En ce qui concerne la jante 14, la portée plane B4G est une surface orientée axialement en sens opposé à la composante axiale de l'orientation de la portée tronconique d'accrochage côté jante A4G.

Ladite partie d'accrochage 12 présente un diamètre minimal Φₛₘ situé radialement sous le bec inférieur 125i, c'est à dire sous la portée d'accrochage côté fraction A2D. La jante présente un diamètre maximal Φ_{JM} situé radialement au dessus de la portée d'accrochage côté jante A4G, et le diamètre maximal de jante Φ_{JM} est plus grand que le diamètre minimal de fraction Φₛₘ.

On peut noter une disposition constructive avantageuse : la jante comporte au moins une portée de blocage indépendante de la ou des portées d'accrochage côté jante, la ou lesdites portées de blocage étant destinées à coopérer avec ledit organe de blocage du préhenseur. Cela facilite la prise en tenaille comme expliqué ci-dessous, ce qui permet de bien immobiliser les fractions sur la jante lorsque chaque portée d'accrochage est une surface tronconique d'angle non coinçant, lesdites surfaces tronconiques étant orientées axialement du même côté du noyau.

Le fonctionnement est le suivant. La condition de départ est que toutes les fractions 10 sont correctement positionnées et maintenues sur la jante 14. Le préhenseur P1 est inséré sous la jante 14, par un mouvement au cours duquel les axes du préhenseur P1 et du noyau 1 sont confondus, en exécutant un mouvement axial relatif pendant lequel, le noyau 1 étant supposé immobile à la figure 1, le préhenseur P1 se déplace de gauche vers la droite de la figure 1. La portée de blocage P11G vient en butée contre la portée de blocage B4G, et la poursuite du mouvement axial provoque un compression des ressorts P15. Au cours de ce mouvement, les lames de verrouillage P12 s'esquivent parce que, lorsque le renflement P13 heurte la jante 14, grâce à des chanfreins, le renflement P13 des lames de verrouillage P12 est repoussée radialement vers l'axe.

Dès que le préhenseur P1 est suffisamment avancé, les lames de verrouillage P12 reprennent leur configuration telle que représenté au dessin, par simple rappel élastique. On a commandé le mouvement axial relatif jusqu'à ce que le renflement P13 soit au-delà de la configuration de la figure 1. Sous le rappel dû aux ressorts P15, la portée de blocage P15D de chaque lame de verrouillage P12 se place en face de la portée de blocage B2D d'une des fractions 10. Puis on exécute un mouvement axial inverse jusqu'à ce que la portée de blocage P15D de chaque lame de verrouillage P12 entre en contact avec la portée de blocage B2D d'une des fractions 10. Ainsi, et dans la limite de l'effort des ressorts P15, tout mouvement relatif entre le noyau 1 et le préhenseur P1 est également empêché. Le noyau 1 est ainsi bloquée axialement dans les deux sens par rapport au préhenseur P1, qui pince d'un côté (côté droit) chacune des fractions 10 contre la jante 14, celle-ci étant elle-même bloquée contre le préhenseur P1, sans jeu entre les pièces assemblées.

L'homme du métier aura remarqué que, les portées d'accrochage côté jante et côté fraction étant des surfaces tronconiques, toutes les portées d'accrochage étant en contact les unes sur les autres, les fractions 10 ne seront empêchés de se déplacer radialement par rapport à la jante 14 que si celle-ci est bloquée axialement par rapport aux fractions 10 en position de montage. Par ailleurs, la jante 14 soutient et centre radialement chaque fraction 10, et notamment empêche les fractions inversées 10i de se décentrer radialement sous l'effort appliqué par la jante sur les portées d'accrochage côté fraction.

C'est grâce au pincement décrit au paragraphe ci-dessus et au centrage par la jante que les fractions 10 sont elles-mêmes verrouillées radialement sur la jante 14.

Toutes les commandes de blocage sont simples à mécaniser et à automatiser. L'organe de blocage (ci-dessus plus particulièrement les lames de verrouillage P12) est déployable dans un plan passant par l'axe du noyau. On pourrait aussi prévoir un organe de blocage déployable radialement.

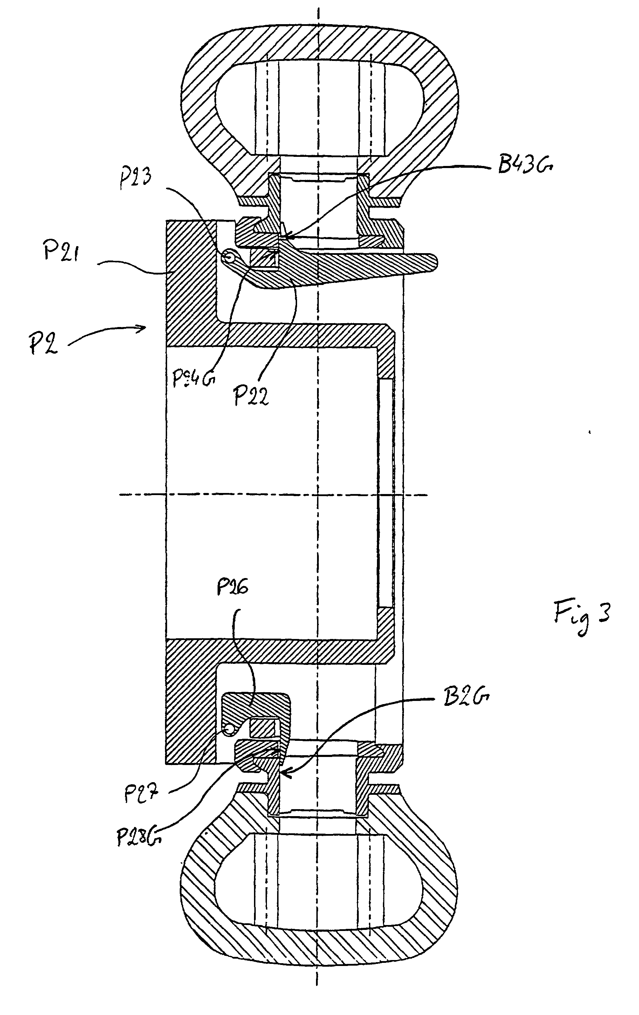

Un deuxième préhenseur P2 est illustré à la figure 3. Il comporte deux organes de blocage différents, permettant de pincer à la demande seulement la jante 14, ou alors toutes les fractions 10 comme ci-dessus, ou les deux. Le préhenseur P2 comporte un flasque P21 sur lequel est articulé au moins un crochet de verrouillage de jante P22 (voir axe d'articulation P23), lequel comporte une portée de blocage P24G destinée à coopérer avec une portée de blocage B43G aménagée sur la jante 14. A cette fin, on voit que la jante comporte un évidement médian, permettant que cette portée de blocage B43G, tout en étant orientée axialement vers la droite, soit proche de l'extrémité axiale de gauche de la jante 14 et puisse être atteinte par un organe de blocage. Cela permet de pincer la jante sur la partie gauche de celle-ci, sans interférer du tout avec les fractions 10. Cela est donc utile pour déplacer axialement la jante seule par rapport aux fractions.

On voit que le deuxième préhenseur P2 comporte des crochets de verrouillage de fractions P26, ici autant que le noyau compte de fractions 10. Ces crochets de verrouillage de fractions P26 sont articulés sur le flasque P21 (voir axe d'articulation P27). Les crochets de verrouillage de fractions P26 comportent une portée de blocage P28G destinée à coopérer avec une portée de blocage B2G aménagée sur chacune des fractions 10. Notons que chacune des fractions 10 est pincée contre le préhenseur P2 en introduisant les crochets de verrouillage de fractions P26 par des évidements aménagés de façon appropriée dans la jante, de préférence autant qu'il y a de fraction. Le fonctionnement peut par exemple faire appel à un dispositif de rappel élastique des crochets en position verrouillée (non représenté), le déverrouillage faisant intervenir des moyens appropriés sur lesquels il est inutile de s'étendre.

Cela permet de pincer l'ensemble du noyau 1 dans la partie gauche de celui-ci, sans empiéter sur la face latérale de droite. Cela est utile pour laisser libre la reprise du noyau 1 par un troisième préhenseur le saisissant par le côté droit.

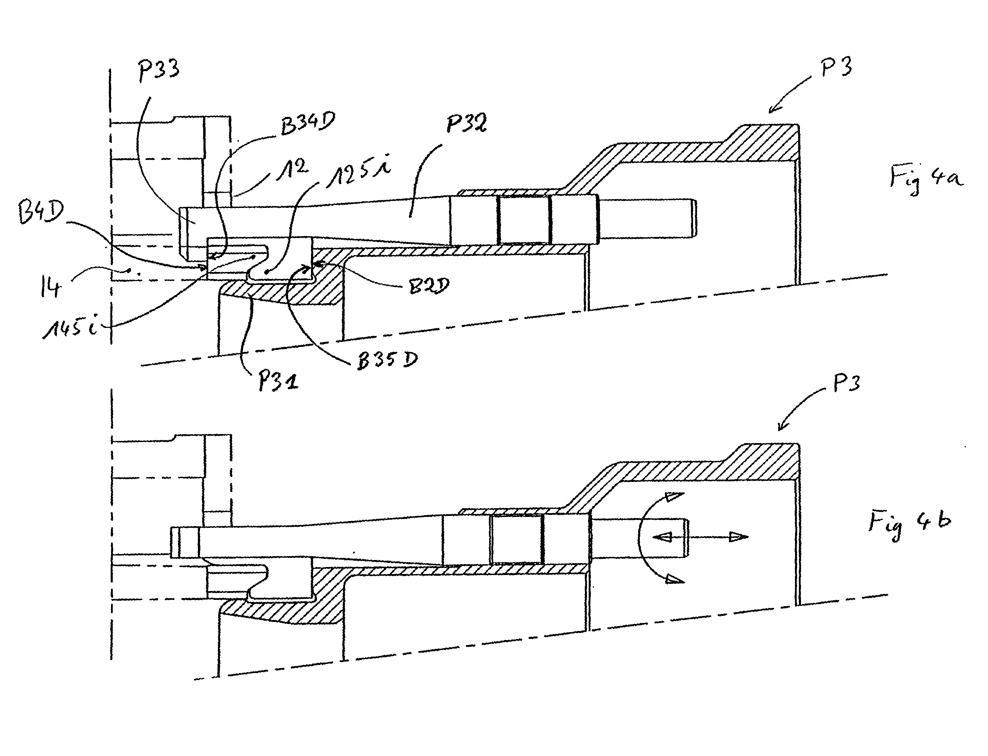

C'est précisément pour cela qu'est conçu le troisième préhenseur P3 illustré aux figures 4a et 4b. Celui-ci comporte un prolongement P31 qui s'insère radialement sous la jante 14, dont on reconnaît notamment le bec 145i de droite. Ce préhenseur P31 s'insert circonférentiellement entre les organes de tout autre préhenseur encore en prise par la gauche, comme le préhenseur P2 par exemple. Sur une partie intermédiaire, le préhenseur P3 comporte une portée de blocage P35D orientée axialement vers le noyau 1. Comme toutes les portées de blocage illustrées dans ces exemples de réalisation de l'invention, la portée de blocage est disposée dans un plan perpendiculaire à l'axe du préhenseur, donc du noyau, mais il suffirait qu'elle soit radiale. Notons que le bec 125i de la partie d'accrochage 12 de fraction 10 comporte une portée de blocage B2D orientée axialement vers le préhenseur P3, pour coopérer avec la portée de blocage P35D du préhenseur P3.

Le préhenseur P3 comporte au moins deux doigts P32. Chaque doigt P32 est orienté axialement, est monté rotatif sur lui-même dans le corps P30 du préhenseur P3, et à coulissement axial possible dans le corps P30 du préhenseur P3. Chaque doigt P32 comporte à son extrémité un rebord P33. C'est sur ce rebord P33 qu'est aménagée une portée de blocage B34D, pour coopérer avec une portée de blocage B4D aménagée sur la jante 14. Au moins certaines des fractions comportent les ouvertures nécessaires aménagées dans l'un des flancs de la partie d'accrochage de fraction, radialement juste au dessus du bec 125i, afin de pouvoir insérer lesdits doigts P32. De préférence, chaque fraction comporte à l'un de ses côté au moins une telle ouverture, localisée radialement au-dessus de la ou des portées d'accrochage côté fraction.

Le fonctionnement est le suivant. La condition de départ est que toutes les fractions 10 sont correctement positionnés et maintenues sur la jante 14, par exemple par un préhenseur tel que P2, et que les doigts P32 soit orientés comme à la figure 4b. Le préhenseur P3 exécute un mouvement au cours duquel les axes du préhenseur P3 et du noyau 1 sont confondus, le préhenseur P3 se déplaçant de droite vers la gauche de la figure 4a, jusqu'à ce que la portée de blocage P25D vienne en butée contre la portée de blocage B2D, ce qui interdit tout mouvement relatif dans lequel le noyau 1 se déplacerait vers la droite par rapport au préhenseur P3. Dès que le préhenseur P3 arrive en butée, les doigts P32 sont translatés axialement vers la droite au delà de leur position finale, puis ils sont tournés d'un quart de tour et reviennent axialement vers la droite (figure 4a), de sorte que la portée de blocage P34D de chaque doigt P32 se place exactement en contact avec la portée de blocage B4D de la jante 14, ce qui interdit tout mouvement relatif dans lequel le noyau 1 se déplacerait vers la gauche par rapport au préhenseur P3. Le noyau 1 est ainsi immobilisé par rapport au préhenseur P3 qui pince (sans jeu, et contre la force d'un ressort -non représenté- selon le même principe que pour le préhenseur P1) directement par son corps chacune des fractions 10 contre la jante 14, celle-ci étant retenue par les doigts P32. A ce stade, la prise du noyau par le préhenseur P1 ou le préhenseur P2 peut être libérée.

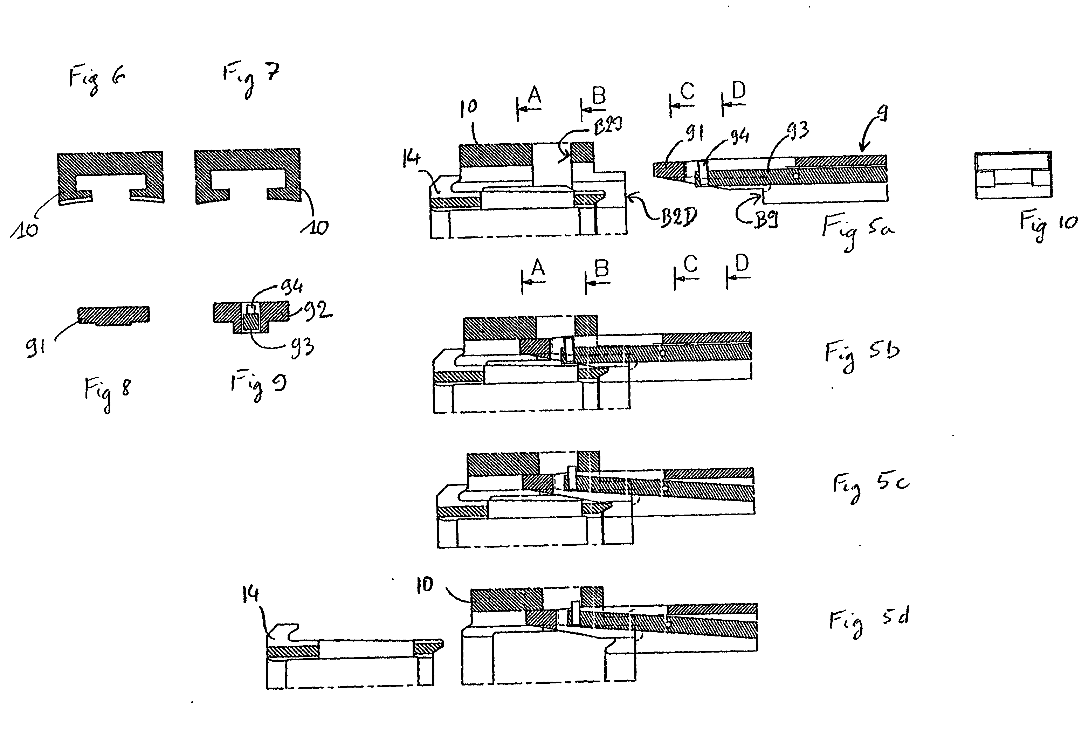

Lors du démontage du noyau par l'intérieur du pneumatique, les fractions les plus grandes doivent être saisies individuellement et enlevés successivement les unes après les autres en les éloignant radialement de l'intérieur du pneu, puis en les évacuant axialement par rapport au pneu, et ceci en passant par l'espace libre à l'intérieur des bourrelets du pneumatique. On peut pour cela utiliser autant de poignards 9 que le noyau 1 compte de fractions 10 (voir figures 5a, 5b, 5c, 5d, 6, 7, 8, 9 et 10). Le noyau 1, dans lequel la partie d'accrochage de chaque fraction, comporte à cette fin au moins une ouverture disposée radialement au-dessus de la ou des portées d'accrochage côté fraction, ladite ouverture étant destinée à permettre la prise individuelle de chaque fraction par les poignards 9, constituant ici un exemple de réalisation parmi bien d'autres possibles d'un dispositif de manipulation individuelle des fractions.

Chaque poignard 9 est un organe élancé, disposé parallèlement à l'axe du noyau, à une position radiale et azimutale convenable pour coopérer avec chaque fraction. Chaque poignard 9 comporte un tête 91 chanfreinée pour s'insérer correctement dans les ouvertures des fractions 10. Il comporte un basculeur 93 articulé de façon à ce que le basculeur 93 décrive un mouvement de rotation dans un plan comprenant l'axe de rotation du noyau 1. Chaque basculeur est rappelé élastiquement dans la position de verrouillage illustrée à la figure 5c, et est commandé de façon appropriée pour être amené dans la position de la figure 5a. Le basculeur est terminé par un ergot 94 s'étendant radialement vers les plus grands rayons. Chaque poignard 9 comporte un portée de blocage B9 orientée axialement vers le noyau 1. Chaque fraction comporte, au niveau de chacune des ouvertures recevant un des poignards 9, comporte une portée de blocage B29 pour coopérer avec un ergot 94.

Le fonctionnement est le suivant. La condition de départ est que toutes les fractions 10 sont correctement positionnés et maintenus sur la jante 14, par exemple par un préhenseur tel que P2, et que les basculeurs 93 de tous les poignards 9 soient à la position escamotée de la figure 5a. Les poignards sont tous insérés dans leurs fractions 10 respectifs, par un mouvement au cours duquel, le noyau 1 étant supposé immobile, les poignards 9 se déplacent de gauche vers la droite à la figure 5b, jusqu'à ce que la portée de blocage B9 vienne en butée contre la portée de blocage B2D, ce qui interdit tout mouvement relatif dans lequel chaque fraction 10 se déplacerait vers la droite par rapport au poignard 9. Dès que les poignards 9 arrivent en butée, les basculeurs 93 sont déployés et l'ergot 94 de chaque basculeur 93 se place exactement en face et contre la portée de blocage B29 de chaque fraction 10 (voir figure 5c), ce qui interdit tout mouvement relatif dans lequel la fraction 10 se déplacerait vers la gauche par rapport au poignard 9. Chaque fraction 10 est ainsi individuellement bloqué axialement dans les deux sens par rapport à son poignard 9.

On peut alors extraire la jante 14 en déverrouillant les crochets P26 du préhenseur P2, les crochets P22 restant en position de verrouillage contre la jante 14 (voir figure 5d et figure 3).

Dans la conception qui vient d'être proposée, les portée d'accrochage côté fraction et portée d'accrochage côté jante sont conformées de façon à permettre un mouvement axial relatif de la jante par rapport à l'ensemble des fractions dans un sens seulement. Le noyau reste toujours dépendant ou prisonnier d'un préhenseur, c'est à dire d'une potence ou d'une machine ayant les organes de préhension nécessaire, puisqu'il faut utiliser des moyens de blocages aménagés sur le préhenseur pour assurer le maintien du noyau en configuration montée. Cette conception présente de multiples avantages, notamment en ce qu'elle se prête tout particulièrement bien à une automatisation simple et robuste. De nombreuses variantes de préhenseurs et de moyens de blocage peuvent être imaginées, tout en gardant l'avantage d'une prise du noyau tantôt par la droite, tantôt par la gauche, en dessinant des organes mécaniques peu encombrants et suffisamment robustes.

Grâce à la conception du noyau selon l'invention, on peut exécuter différents procédés de montage d'un noyau, de manipulation d'un noyau, de fabrication d'un pneumatique, de démontage d'un noyau. Les exemples permettent d'apercevoir toutes les possibilités de l'invention à cet égard.

L'invention permet d'exécuter un procédé de montage d'un noyau définissant au moins partiellement une forme de fabrication pour un pneumatique, le noyau comportant :
- une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation radiale par rapport à
- une jante continue circonférentiellement,
ledit procédé consistant à :
- rassembler et positionner dans l'espace les différentes fractions de façon adjacente circonférentiellement,
- saisir la jante au moyen d'un préhenseur par un côté,
- déplacer relativement la jante par rapport aux fractions de façon à engager les fractions sur la jante par l'autre côté et,
- par ledit préhenseur, prendre en tenaille d'une part les fractions et d'autre part la jante de façon à immobiliser les fractions par rapport à la jante.

L'invention permet d'exécuter un procédé de manipulation d'un noyau définissant au moins partiellement une forme de fabrication pour un pneumatique, le noyau comportant :
- une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation par rapport à
- une jante continue circonférentiellement,
ledit procédé consistant à :
- au moyen d'un préhenseur, maintenir le noyau par un côté par une première prise en tenaille d'une part des fractions et d'autre part de la jante de façon à immobiliser les fractions par rapport à la jante,
- saisir la jante au moyen d'un autre préhenseur par l'autre côté,
- par ledit autre préhenseur, effectuer une seconde prise en tenaille d'une part des fractions et d'autre part de la jante, de façon à immobiliser les fractions par rapport à la jante,
- libérer la première prise la prise en tenaille,
- éloigner axialement relativement ledit préhenseur par rapport audit autre préhenseur maintenant ledit noyau par la seconde prise en tenaille.

L'invention permet d'exécuter un procédé de fabrication d'un pneumatique au moyen d'un noyau définissant au moins partiellement une forme de fabrication pour un pneumatique, le noyau comportant :
- une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation par rapport à
- une jante continue circonférentiellement,
ledit procédé consistant à, le noyau étant préassemblé de sorte que l'ensemble des fractions est positionné sur la jante, et le noyau étant saisi par un préhenseur à un côté de la jante, et étant maintenu par une première prise en tenaille :
- par l'autre côté de la jante, au moyen d'un autre préhenseur, effectuer une deuxième en tenaille des fractions et de la jante de façon à immobiliser les fractions par rapport à la jante,
- libérer la première prise en tenaille,
- mettre en rotation autour de son axe ledit noyau au moyen dudit autre préhenseur, pour enrouler des rubans de caoutchouc autour du noyau et pour déposer des renforts aux endroits voulus, selon l'architecture dudit pneumatique,
- saisir le noyau au moyen d'un préhenseur par le côté autre que celui du préhenseur effectuant la deuxième prise en tenaille, en effectuant une troisième prise en tenaille d'une part des fractions et d'autre part de la jante, de façon à immobiliser les fractions par rapport à la jante,
- libérer la seconde prise la prise en tenaille,
- mettre en mouvement axialement ledit noyau au moyen dudit préhenseur effectuant la troisième prise en tenaille pour évacuer le noyau supportant un pneumatique cru.

L'invention permet d'exécuter un procédé de démontage d'un noyau hors de l'intérieur d'un pneumatique, ledit noyau définissant au moins partiellement une forme de fabrication pour un pneumatique, le noyau comportant :
- une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation radiale par rapport à
- une jante continue circonférentiellement,
- des portées de blocage agencées respectivement sur la jante et sur chacune des fractions,
ledit noyau étant destiné à coopérer avec au moins un préhenseur dudit noyau, ledit préhenseur comportant un organe de blocage, ledit organe de blocage étant déployable pour coopérer avec lesdites portées de blocage afin d'immobiliser axialement les fractions sur la jante et étant escamotable pour libérer lesdites fractions,
ledit procédé de démontage consistant à, le noyau supportant un pneumatique, ledit noyau étant en prise sur un préhenseur bloquant les fractions et la jante, :
- agripper chacune des fractions,
- escamoter les moyens de blocage des fractions par rapport au préhenseur sans libérer les moyens de blocage de la jante par rapport au préhenseur,
- écarter axialement la jante par rapport à l'ensemble des fractions, du côté dudit préhenseur,
- déplacer chacune des fractions radialement à l'intérieur de l'espace libre sous les bourrelets du pneumatique puis les déplacer axialement, en commençant par celui ou celles des fractions dont lesdites faces transversales sont convergentes radialement à l'extérieur du noyau, tout en saisissant le pneumatique fabriqué sur le noyau par la surface extérieure du pneu au plus tard à partir du moment où il ne peut plus être maintenu en place par certaines des fractions,
- évacuer ledit pneumatique.

Les manipulations de certains de ces procédés sont encore facilitées lorsque, comme proposé ci-dessus, la jante comporte un ou des évidements médians pour faciliter le déploiement d'organes de blocage et permettant une prise en tenaille assez compact. De même, les manipulations de certains de ces procédés sont aussi facilitées lorsque, comme proposé ci-dessus, des fractions ou toutes les fractions comportent à l'un de ses côté au moins une ouverture localisée radialement au-dessus de la ou des portées d'accrochage côté fraction.

## Revendications

1. Noyau (1) définissant au moins partiellement une forme de fabrication pour la surface intérieure d'un pneumatique, ledit noyau étant destiné à coopérer avec au moins un préhenseur (P1, P2, P3) indépendant dudit noyau, le noyau comportant :
• une pluralité de fractions (10) ayant chacune des faces transversales, lesdites fractions étant adjacentes circonférentiellement et disposées côte à côte, lesdites faces transversales d'au moins une fraction étant convergentes radialement à l'extérieur du noyau, une partie d'accrochage (12) étant agencée à l'extrémité radialement intérieure de chacune des fractions,
• une jante (14) continue circonférentiellement, disposée radialement sous chacune des fractions, pour les supporter, les centrer et les relier,
• au moins une portée d'accrochage côté fraction (A2G, A2D), agencée sur la partie d'accrochage de chacune des fractions, et au moins une portée d'accrochage côté jante (A4G, A4D), complémentaire à la portée d'accrochage côté fraction, agencée sur la jante, dans lequel
- la jante (14) est monobloc axialement,
- lesdites au moins une portée d'accrochage côté fraction et au moins une portée d'accrochage côté jante coopérant pour, pour chaque fraction, empêcher tout mouvement radial de la fraction considérée par rapport à la jante,
- l'ensemble desdites au moins une portée d'accrochage côté fraction et portée d'accrochage côté jante sont agencées de façon à permettre un mouvement axial relatif de la jante par rapport aux fractions dans un sens seulement, **caractérisé en ce que** :
- l'ensemble desdites au moins une portée d'accrochage côté fraction comporte une portée d'accrochage correspondante côté jante monobloc axialement,

2. Ensemble comportant un noyau selon la revendication 1 et un préhenseur comportant des moyens de blocage pour immobiliser axialement seulement les fractions sur la jante.

3. Ensemble selon la revendication 2 dans lequel les moyens de blocage pour immobiliser les fractions sur la jante comprennent des portées de blocage (B2G, B2D, B43G) indépendantes des portées d'accrochage et agencées sur les fractions, lesdites portées de blocage étant destinées à coopérer avec au moins un organe de blocage indépendant des portées d'accrochage et supporté par ledit préhenseur, ledit organe de blocage étant déployable pour coopérer avec au moins une portée de blocage agencée sur les fractions afin d'immobiliser les fractions sur la jante, ledit organe de blocage étant escamotable pour libérer lesdites fractions.

4. Noyau selon la revendication 1, comportant deux portées d'accrochage côté fraction (A2G, A2D) sur chaque fraction (10), axialement séparées l'une de l'autre.

5. Noyau selon la revendication 4, dans lequel les portées de blocage sont des portées planes comprises dans des plans perpendiculaires à l'axe.

6. Ensemble selon l'une des revendications 2 ou 3, dans lequel l'organe de blocage est déployable radialement.

7. Noyau selon l'une des revendications 1 ou 4 ou 5, dans lequel lesdites portée d'accrochage côté fraction (A2G, A2D) et portée d'accrochage côté jante (A4G, A4D) sont chacune situées sur un bec (125s, 125i, 145s, 145i) agencé circonférentiellement.

8. Noyau selon la revendication 7, dans lequel chaque fraction (10) comporte deux becs (125s, 125i) agencés circonférentiellement, l'un, dit bec inférieur (125i), étant disposé radialement à un niveau inférieur à l'autre, dit bec supérieur (125s).

9. Noyau selon la revendication 8, dans lequel chaque portée d'accrochage est une surface tronconique, lesdites surfaces tronconiques étant orientées axialement du même côté du noyau.

10. Noyau selon la revendication 8, dans lequel chaque portée d'accrochage est une surface tronconique d'angle non coinçant, lesdites surfaces tronconiques étant orientées axialement du même côté du noyau.

11. Noyau selon l'une des revendications 1, 4, 5, ou 7 à 10, dans lequel la jante comporte autant d'évidements médians qu'il y a de fraction.

12. Noyau selon l'une des revendications 1, 4, 5, ou 7 à 11, dans lequel chaque fraction comporte à l'un de ses côté au moins une ouverture localisée radialement au-dessus de la ou des portées d'accrochage côté fraction.

13. Ensemble selon l'une des revendications 2, 3 ou 6, dans lequel la jante (14) comporte au moins une portée de blocage (B4G, B43G, B4D) indépendante de la ou des portées d'accrochage côté jante, la ou lesdites portées de blocage étant destinées à coopérer avec ledit organe de blocage du préhenseur.

14. Noyau selon l'une des revendications 1, 4, 5, ou 7 à 11 ou 13, dans lequel ladite partie d'accrochage (12) est réalisée essentiellement en un premier matériau, ledit noyau comportant une partie principale (13) complémentaire à ladite partie d'accrochage, réalisée essentiellement en un second matériau différent du premier matériau, rendue solidaire de ladite partie d'accrochage, ladite forme de fabrication étant essentiellement définie par ladite partie principale.

15. Noyau selon la revendication 14, dans lequel la partie d'accrochage est réalisée en acier et la partie principale est réalisée en alliage d'aluminium.

16. Noyau selon la revendication 14 ou 15 dans lequel, en considérant l'ensemble des fractions, le dimensionnement et la configuration de la partie principale, de la partie d'accrochage, et de la liaison de la partie principale à la partie d'accrochage sont tels que, à la température de vulcanisation du caoutchouc, les parties principales sont en contact à jeu nul les unes contre les autres et présentent une surface de moulage régulière, sans ressaut entre fractions adjacentes, alors que, aux températures inférieures à la température de vulcanisation, des jeux apparaissent entre les parties principales.

17. Noyau selon l'une des revendications 14 à 16, dans lequel la partie principale (13) est réalisée essentiellement en un matériau coulable et bon conducteur thermiquement, moulé avec au moins une résistance électrique par fraction, noyée à l'intérieur de la paroi formant le dôme radialement extérieur de chaque partie principale.

18. Ensemble selon l'une des revendications 2, 3, 6 ou 13, comprenant au moins deux zones de prise sur la jante, chacune permettant d'assurer le centrage et le support de la jante sur un préhenseur différent.

19. Procédé de montage d'un noyau définissant au moins partiellement une forme de fabrication pour un pneumatique, le noyau comportant :
• une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation radiale par rapport à
• une jante continue circonférentiellement,
ledit procédé consistant à :
• rassembler et positionner dans l'espace les différentes fractions de façon adjacente circonférentiellement,
• saisir la jante au moyen d'un préhenseur par un côté,
• déplacer relativement la jante par rapport aux fractions de façon à engager les fractions sur la jante par l'autre côté et, **caractérisé en ce que** :
• ledit préhenseur prend en tenaille d'une part les fractions et d'autre part la jante de façon à immobiliser les fractions par rapport à la jante.

20. Procédé de manipulation d'un noyau définissant au moins partiellement une forme de fabrication pour un pneumatique, le noyau comportant :
• une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation par rapport à
• une jante continue circonférentiellement, **caractérisé en ce que**
ledit procédé consiste à :
• au moyen d'un préhenseur, maintenir le noyau par un côté par une première prise en tenaille d'une part des fractions et d'autre part de la jante de façon à immobiliser les fractions par rapport à la jante,
• saisir la jante au moyen d'un autre préhenseur par l'autre côté,
• par ledit autre préhenseur, effectuer une seconde prise en tenaille d'une part des fractions et d'autre part de la jante, de façon à immobiliser les fractions par rapport à la jante,
• libérer la première prise la prise en tenaille,
• éloigner axialement relativement ledit préhenseur par rapport audit autre préhenseur maintenant ledit noyau par la seconde prise en tenaille.

21. Procédé de fabrication d'un pneumatique au moyen d'un noyau définissant au moins partiellement une forme de fabrication pour un pneumatique, le noyau comportant :
• une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation par rapport à
• une jante continue circonférentiellement,
ledit procédé consistant à, le noyau étant préassemblé de sorte que l'ensemble des fractions est positionné sur la jante, et le noyau étant saisi par un préhenseur à un côté de la jante, et **caractérisé en ce que** le noyau étant maintenu par une première prise en tenaille :
• par l'autre côté de la jante, au moyen d'un autre préhenseur, effectuer une deuxième prise en tenaille des fractions et de la jante de façon à immobiliser les fractions par rapport à la jante,
• libérer la première prise en tenaille,
• mettre en rotation autour de son axe ledit noyau au moyen dudit autre préhenseur, pour enrouler des rubans de caoutchouc autour du noyau et pour déposer des renforts aux endroits voulus, selon l'architecture dudit pneumatique,
• saisir le noyau au moyen d'un préhenseur par le côté autre que celui du préhenseur effectuant la deuxième prise en tenaille, en effectuant une troisième prise en tenaille d'une part des fractions et d'autre part de la jante, de façon à immobiliser les fractions par rapport à la jante,
• libérer la seconde prise la prise en tenaille,
• mettre en mouvement axialement ledit noyau au moyen dudit préhenseur effectuant la troisième prise en tenaille pour évacuer le noyau supportant un pneumatique cru.

22. Procédé de démontage d'un noyau hors de l'intérieur d'un pneumatique, ledit noyau définissant au moins partiellement une forme de fabrication pour un pneumatique, le noyau comportant :
• une pluralité de fractions ayant chacune des faces transversales, lesdites fractions étant adjacentes circonférentiellement et disposées côte à côte, lesdites faces transversales d'au moins une fraction étant convergentes radialement à l'extérieur du noyau, chaque fraction étant pourvue de parties d'accrochage, et chaque fraction étant pourvue de moyens d'immobilisation radiale par rapport à
• une jante continue circonférentiellement,
• des portées de blocage agencées respectivement sur la jante et sur chacune des fractions,
ledit noyau étant destiné à coopérer avec au moins un préhenseur dudit noyau, ledit préhenseur comportant un organe de blocage, ledit organe de blocage étant déployable pour coopérer avec lesdites portées de blocage afin d'immobiliser axialement les fractions sur la jante et étant escamotable pour libérer lesdites fractions, **caractérisé en ce que** :
ledit procédé de démontage consiste à, le noyau supportant un pneumatique, ledit noyau étant en prise sur un préhenseur bloquant les fractions et la jante, :
• agripper chacune des fractions,
• escamoter les moyens de blocage des fractions par rapport au préhenseur sans libérer les moyens de blocage de la jante par rapport au préhenseur,
• écarter axialement la jante par rapport à l'ensemble des fractions, du côté dudit préhenseur,
• déplacer chacune des fractions radialement à l'intérieur de l'espace libre sous les bourrelets du pneumatique puis les déplacer axialement, en commençant par celui ou celles des fractions dont lesdites faces transversales sont convergentes radialement à l'extérieur du noyau, tout en saisissant le pneumatique fabriqué sur le noyau par la surface extérieure du pneu au plus tard à partir du moment où il ne peut plus être maintenu en place par certaines des fractions,
• évacuer ledit pneumatique.

## Claims

1. Core (1) at least partially defining a manufacturing form for the internal surface of a tyre, said core being intended to cooperate with at least one gripper (P1, P2, P3) independent of said core, the core comprising:
• a plurality of fractions (10) each having transverse faces, said fractions being circumferentially adjacent and disposed side by side, said transverse faces of at least one fraction converging radially at the exterior of the core, an attachment portion (12) being arranged at the radially internal end of each of the fractions,
• a circumferentially continuous rim (14) disposed radially beneath each of the fractions in order to support, centre and connect them,
• at least one fraction-side attachment bearing surface (A2G, A2D), arranged on the attachment portion of each of the fractions, and at least one rim-side attachment bearing surface (A4G, A4D), complementary with the fraction-side attachment bearing surface, arranged on the rim, in which
- the rim (14) is axially monobloc,
- said at least one fraction-side attachment bearing surface and at least one rim-side attachment bearing surface cooperate so as to prevent any radial movement of the fraction under consideration relative to the rim, with regard to each fraction,
- the assembly consisting of said at least one fraction-side attachment bearing surface and rim-side attachment bearing surface are arranged so as to allow a relative axial movement of the rim relative to the fractions in a single direction, **characterised in that**:
- the assembly of said at least one fraction-side attachment bearing surface comprises a corresponding attachment bearing surface on the side of the axially monobloc rim.

2. Assembly comprising a core according to claim 1 and a gripper comprising blocking means for axially immobilising only the fractions on the rim.

3. Assembly according to claim 2, in which the blocking means for immobilising the fractions on the rim comprise blocking bearing surfaces (B2G, B2D, B43G) independent of the attachment bearing surfaces and arranged on the fractions, said blocking bearing surfaces being intended to cooperate with at least one blocking member independent of the attachment bearing surfaces and supported by said gripper, said blocking member being deployable in order to cooperate with at least one blocking bearing surface arranged on the fractions in order to immobilise the fractions on the rim, said blocking member being retractable in order to free said fractions.

4. Core according to claims 1, comprising two fraction-side attachment bearing surfaces (A2G, A2D) on each fraction (10), axially separated from one another.

5. Core according to claim 4, in which the blocking bearing surfaces are plane bearing surfaces contained in planes perpendicular to the axis.

6. Assembly according to one of claims 2 or 3, in which the blocking member can be deployed radially.

7. Core according to one of claims 1 or 4 or 5, in which said fraction-side attachment bearing surface (A2G, A2D) and rim-side attachment bearing surface (A4G, A4D) are each located on a circumferentially arranged nose (125s, 125i, 145s, 145i).

8. Core according to claim 7, in which each fraction (10) comprises two circumferentially arranged noses (125s, 125i), one, the so-called lower nose (125i), being disposed radially at a lower level than the other, the so-called upper nose (125s).

9. Core according to claim 8, in which each attachment bearing surface is a frustoconical surface, said frustoconical surfaces being orientated axially on the same side of the core.

10. Core according to claim 8, in which each attachment bearing surface is a frustoconical surface with a non-wedging angle, said frustoconical surfaces being orientated axially on the same side of the core.

11. Core according to one of claims 1, 4, 5 or 7 to 10, in which the rim comprises as many median recesses as there are fractions.

12. Core according to one of claims 1, 4, 5 or 7 to 11, in which each fraction comprises, on one of its sides, at least one aperture located radially above the fraction-side bearing surface or surfaces.

13. Assembly according to one of claims 2, 3 or 6, in which the rim (14) comprises at least one blocking bearing surface (B4G, B43G, B4D) which is independent of the rim-side attachment bearing surface or surfaces, the said blocking bearing surface or surfaces being intended to cooperate with said blocking member of the gripper.

14. Core according to one of claims 1, 4, 5 or 7 to 11 or 13, in which said attachment portion (12) is essentially produced from a first material, said core comprising a main portion (13) complementary with said attachment portion, essentially produced from a second material different from the first material and integrally connected to said attachment portion, said manufacturing mould being essentially defined by said main portion.

15. Core according to claim 14, in which the attachment portion is produced from steel and the main portion is produced from aluminium alloy.

16. Core according to claim 14 or 15, in which, considering all the fractions, the dimensioning and configuration of the main portion, of the attachment portion and of the join between the main portion and the attachment portion are such that, at the vulcanisation temperature of the rubber, the main portions are in contact with one another with zero clearance and have a uniform moulding surface, without a projection between adjacent fractions whereas, at temperatures lower than the vulcanisation temperature, clearances appear between the main portions.

17. Core according to one of claims 14 to 16, in which the main portion (13) is essentially produced from a pourable material which is a good conductor of heat and is moulded with at least one electrical resistor per fraction embedded inside the wall forming the radially external dome of each main portion.

18. Assembly according to one of claims 2, 3, 6 or 13, comprising at least two zones for gripping on the rim, each for centring and supporting the rim on a different gripper.

19. Process for mounting a core at least partially defining a tyre manufacturing form, the core comprising:
• a plurality of fractions each having transverse faces, said fractions being circumferentially adjacent and disposed side by side, said transverse faces of at least one fraction converging radially at the exterior of the core, each fraction being provided with attachment portions and each fraction being provided with means for radial immobilisation relative to
• a circumferentially continuous rim,
said process involving:
• combining and positioning in space the various fractions in a circumferentially adjacent manner,
• grasping the rim by one side using a gripper,
• displacing the rim relative to the fractions so as to engage the fractions on the rim by the other side and **characterised in that**:
• said gripper grips on the one hand the fractions on the other hand the rim, so as to immobilise the fractions relative to the rim.

20. Process for handling a core at least partially defining a tyre manufacturing form, the core comprising:
• a plurality of fractions each having transverse faces, said fractions being circumferentially adjacent and disposed side by side, said transverse faces of at least one fraction converging radially at the exterior of the core, each fraction being provided with attachment portions and each fraction being provided with means for immobilisation relative to
• a circumferentially continuous rim, **characterised in that**:
said process involves:
• by means of a gripper, holding the core by one side with a first gripping on the one hand of the fractions and on the other hand of the rim, so as to immobilise the fractions relative to the rim,
• grasping the rim by the other side using another gripper,
• with said other gripper, effecting a second gripping on the one hand of the fractions and on the other hand of the rim, so as to immobilise the fractions relative to the rim,
• freeing the first gripping,
• moving said gripper away axially relative to said other gripper holding said core by the second gripping.

21. Process for manufacturing a tyre using a core at least partially defining a tyre manufacturing form, the core comprising:
• a plurality of fractions each having transverse faces, said fractions being circumferentially adjacent and disposed side by side, said transverse faces of at least one fraction converging radially at the exterior of the core, each fraction being provided with attachment portions and each fraction being provided with means for immobilisation relative to
• a circumferentially continuous rim,
said process involving, once the core has been preassembled so that all the fractions are positioned on the rim and once the core has been grasped by a gripper on one side of the rim and **characterised in that** the core has been held by a first gripping;
• with the other side of the rim, using another gripper, effecting a second gripping of the fractions and of the rim so as to immobilise the fractions relative to the rim,
• freeing the first gripping,
• setting said core into rotation round its axis by means of said other gripper in order to wind bands of rubber round the core and to deposit reinforcements at the desired locations, according to the architecture of said tyre,
• grasping the core by means of the gripper by the opposite side to that of the gripper effecting the second gripping by effecting a third gripping on the one hand of the fractions and on the other hand of the rim so as to immobilise the fractions relative to the rim,
• freeing the second gripping,
• setting said core into axial movement by means of said gripper effecting the third gripping in order to remove the core supporting an uncured tyre.

22. Process for removing a core from the interior of a tyre, said core at least partially defining a tyre manufacturing form, the core comprising:
• a plurality of fractions each having transverse faces, said fractions being circumferentially adjacent and disposed side by side, said transverse faces of at least one fraction converging radially at the exterior of the core, each fraction being provided with attachment portions and each fraction being provided with means for radial immobilisation relative to
• a circumferentially continuous rim,
• blocking bearing surfaces arranged respectively on the rim and on each of the fractions,
said core being intended to cooperate with at least one gripper of said core, said gripper comprising a blocking member, said blocking member being deployable in order to cooperate with said blocking bearing surfaces in order axially to immobilise the fractions on the rim and being retractable in order to free said fractions, **characterised in that**:
said removal process involves, once the core is supporting a tyre, and once said core is held on a gripper blocking the fractions and the rim:
• grabbing each of the fractions,
• retracting the fraction blocking means relative to the gripper without freeing the rim blocking means relative to the gripper,
• axially moving away the rim relative to all the fractions, on said gripper side,
• displacing each of the fractions radially inside the free space beneath the tyre beads then displacing them axially, beginning with the fraction or fractions of which said transverse faces converge radially at the exterior of the core, while grasping the tyre manufactured on the core by the external surface of the tyre at the latest from the moment when it can no longer be held in position by some of the fractions,
• evacuating said tyre.

## Patentansprüche

1. Kern (1), der mindestens teilweise eine Herstellungsform für die Innenoberfläche eines Reifens festlegt, wobei der genannte Kern dazu bestimmt ist, mit mindestens einem, vom Kern unabhängigen Greifer (P1, P2, P3) zusammenzuarbeiten, und der Kern folgendes aufweist:
• eine Vielzahl von Fraktionen bzw. Bestandteilen (10), die jeweils Querflächen aufweisen, wobei die genannten Bestandteile in Umfangsrichtung nebeneinanderliegen und Seite an Seite angeordnet sind, die genannten Querflächen mindestens eines Bestandteils radial zur Außenseite des Kerns konvergieren, und ein Verriegelungsteil (12) am radial inneren Ende eines jeden der Bestandteile angeordnet ist,
• eine in Umfangsrichtung durchgehende Felge (14), die radial unter jedem der Bestandteile angeordnet ist, um sie abzustützen, sie zu zentrieren und sie zu verbinden, und
• mindestens einen bestandteilseitigen Verriegelungsbereich (A2G, A2D), der auf dem Verriegelungsteil eines jeden der Bestandteile angeordnet ist, und mindestens einen felgenseitigen Verriegelungsbereich (A4G, A4D), der komplementär zum bestandteilseitigen Bereich ist und auf der Felge angeordnet ist, worin:
- die Felge (14) axial einstückig ist,
- der mindestens eine, bestandteilseitige Verriegelungsbereich und der mindestens eine, felgenseitige Verriegelungsbereich zusammenwirken, um in Sperrlage und für jedes Bestandteil jede Radialbewegung des betrachteten Bestandteils bezüglich der Felge zu verhindern, und
- die Anordnung aus dem mindestens einen, bestandteilseitigen Verriegelungsbereich und dem mindestens einen, felgenseitigen Verriegelungsbereich derart eingerichtet sind, daß eine axiale Relativbewegung der Felge bezüglich der Bestandteile nur in einer Richtung gestattet ist, **dadurch gekennzeichnet, daß**
- die Anordnung aus dem genannten, mindestens einen, bestandteilseitigen Verriegelungsbereich einen entsprechenden, felgenseitigen Verriegelungsbereich axial aus einem Stück aufweist.

2. Anordnung mit einem Kern nach Anspruch 1 und einem Greifer, der Sperrmittel aufweist, um axial lediglich die Bestandteile auf der Felge unbeweglich festzulegen.

3. Anordnung nach Anspruch 2, in der die Sperrmittel zum Festlegen der Bestandteile auf der Felge Sperrbereiche (B2G, B2D, B43G) umfassen, die von den Verriegelungsbereichen unabhängig sind und auf den Bestandteilen angeordnet sind, wobei die genannten Sperrbereiche dazu bestimmt sind, mit mindestens einem Sperrorgan zusammenzuwirken, das von den Verriegelungsbereichen unabhängig ist und von dem genannten Greifer getragen ist, das genannte Sperrorgan ausfahrbar ist, um mit mindestens einem Sperrbereich zusammenzuwirken, der auf den Bestandteilen getragen ist, um die Bestandteile auf der Felge festzulegen, und das genannte Sperrorgan einfahrbar ist, um die genannten Bestandteile freizusetzen.

4. Kern nach Anspruch 1, mit zwei bestandteilseitigen Verankerungsbereichen (A2G, A2D) auf jedem Bestandteil (10), die axial voneinander getrennt sind.

5. Kern nach Anspruch 4, worin die Sperrbereiche ebene Bereiche sind, die in Ebenen senkrecht zur Achse liegen.

6. Anordnung nach einem der Ansprüche 2 oder 3, worin das Sperrorgan radial ausfahrbar ist.

7. Kern nach einem der Ansprüche 1 oder 4 oder 5, worin der genannte, bestandteilseitige Verriegelungsbereich (A2G, A2D) und felgenseitige Verriegelungsbereich (A4G, A4D) jeweils auf einer Nase (125s, 125i, 145s, 145i) sitzen, die in Umfangsrichtung angeordnet ist.

8. Kern nach Anspruch 7, worin jedes Bestandteil (10) zwei Nasen (125s, 125i) aufweist, die in Umfangsrichtung angeordnet sind, von denen die eine, die untere Nase (125i) genannt ist, radial auf einer kleineren Höhe angeordnet ist wie die andere, die obere Nase (125s) genannt ist.

9. Kern nach Anspruch 8, worin jeder Verriegelungsbereich eine kegelstumpfförmige Oberfläche ist, wobei die genannten, kegelstumpfförmigen Oberflächen axial auf der selben Seite des Kernes ausgerichtet sind.

10. Kern nach Anspruch 8, worin jeder Verriegelungsbereich eine kegelstumpfförmige Oberfläche mit einem nicht zusammenpassenden Winkel ist, wobei die genannten, kegelstumpfförmigen Oberflächen axial auf der selben Seite des Kernes ausgerichtet sind.

11. Kern nach einem der Ansprüche 1, 4, 5 oder 7 bis 10, worin die Felge ebenso viele mittige Ausnehmungen aufweist, wie es Bestandteile gibt.

12. Kern nach einem der Ansprüche 1, 4, 5 oder 7 bis 11, worin jedes Bestandteil auf einer seiner Seiten mindestens eine Öffnung aufweist, die radial über dem oder den bestandteilseitigen Verriegelungsbereich(en) angeordnet ist.

13. Anordnung nach einem der Ansprüche 2, 3 oder 6, worin die Felge (14) mindestens einen Sperrbereich (B4G, B43G, B4D) aufweist, der unabhängig von dem oder den felgenseitigen Verriegelungsbereich(en) ist, wobei der oder die genannte(n) Sperrbereich(e) dazu bestimmt ist (sind), mit dem genannten Sperrorgan des Greifers zusammenzuwirken.

14. Kern nach einem der Ansprüche 1, 4, 5 oder 7 bis 11 oder 13, worin das genannte Verriegelungsteil (12) im wesentlichen aus einem ersten Material hergestellt ist, wobei der genannte Kern ein Hauptteil (13) aufweist, das zu diesem Verriegelungsteil komplementär ist, im wesentlichen aus einem zweiten Material hergestellt ist, das sich vom ersten Material unterscheidet, und fest mit dem genannten Verriegelungsteil verbunden ist, wobei die genannte Herstellungsform im wesentlichen für das genannte Hauptteil definiert ist.

15. Kern nach Anspruch 14, worin das Verriegelungsteil aus Stahl hergestellt ist und das Hauptteil aus Aluminiumlegierung hergestellt ist.

16. Kern nach Anspruch 14 oder 15, worin, wenn man die Gesamtheit der Bestandteile betrachtet, die Dimensionierung und Ausbildung des Hauptteils, des Verriegelungsteils und die Verbindung des Hauptteils mit dem Verriegelungsteil derart sind, daß, bei der Vulkanisierungstemperatur des Kautschuk, die Hauptteile mit Spiel Null gegeneinander anstehen und eine regelmäßige Abformoberfläche ohne Absatz zwischen benachbarten Bestandteilen darbieten, während bei kleineren Temperaturen als der Vulkanisierungstemperatur ein Spiel zwischen den Hauptteilen erscheint.

17. Kern nach einem der Ansprüche 14 bis 16, worin das Hauptteil (13) im wesentlichen aus einem Material hergestellt ist, das gießfähig und ein guter Wärmeleiter ist, und mit mindestens einem elektrischen Widerstand pro Bestandteil abgeformt ist, der in das Innere der Wand eingelassen ist, die die radial äußere Haube eines jeden Hauptteils bildet.

18. Anordnung nach einem der Ansprüche 2, 3, 6 oder 13, mit mindestens zwei Aufnahmezonen auf der Felge, wobei es jede gestattet, die Zentrierung und Abstützung auf einem unterschiedlichen Greifer sicherzustellen.

19. Montageverfahren eines Kernes, der mindestens teilweise eine Herstellungsform für einen Reifen definiert, wobei der Kern folgendes umfaßt:
• eine Vielzahl von Bestandteilen, die jeweils Querflächen haben, wobei die genannten Bestandteile in Umfangsrichtung nebeneinanderliegen und Seite an Seite angeordnet sind, die genannten Querflächen mindestens eines Bestandteils radial zur Außenseite des Kernes hin konvergieren, jedes Bestandteil mit Verriegelungsteilen versehen ist und jedes Bestandteil mit Mitteln zur radialen Festlegung bezüglich
• einer Felge versehen ist, die in Umfangsrichtung durchgeht,
wobei das genannte Verfahren in folgendem besteht:
• im Raum die verschiedenen Bestandteile in Umfangsrichtung benachbart zusammenstellen und positionieren,
• Ergreifen der Felge mittels eines Greifers von einer Seite her, und
• die Felge bezüglich der Bestandteile derart relativ verlagern, daß die Bestandteile über die Felge von der anderen Seite her ergriffen werden,
**dadurch gekennzeichnet, daß**
• der genannte Greifer einerseits die Bestandteile und andererseits die Felge derart in die Zange nimmt, daß die Bestandteile bezüglich der Felge festgelegt werden.

20. Verfahren zur Manipulation eines Kerns, der mindestens teilweise eine Herstellungsform für einen Reifen definiert, wobei der Kern folgendes aufweist:
• eine Vielzahl von Bestandteilen, die jeweils querverlaufende Flächen aufweisen, wobei die genannten Bestandteile in Umfangsrichtung benachbart sind und Seite an Seite angeordnet sind, wobei die querverlaufenden Flächen mindestens eines Bestandteils auf der Außenseite des Kernes radial konvergieren, jedes Bestandteil mit Verriegelungsteilen versehen ist und jedes Bestandteil mit Mitteln zur Festlegung bezüglich einer
• Felge versehen ist, die in Umfangsrichtung durchgeht,
**dadurch gekennzeichnet, daß** das genannte Verfahren aus folgendem besteht:
• Festhalten des Kerns mittels eines Greifers von einer Seite her durch zangenartige Aufnahme einerseits der Bestandteile und andererseits der Felge auf eine solche Weise, daß die Bestandteile bezüglich der Felge festgelegt werden,
• Ergreifen der Felge mittels eines anderen Greifers von der anderen Seite her,
• Bewirken einer zweiten, zangenartigen Aufnahme einerseits der Bestandteile und andererseits der Felge durch den genannten, anderen Greifer, auf eine Weise, um die Bestandteile bezüglich der Felge festzulegen,
• Freisetzen der ersten, zangenartigen Aufnahme, und
• relatives, axiales Entfernen des genannten Greifers bezüglich des genannten, anderen Greifers, wobei der genannte Kern durch die zweite, zangenartige Aufnahme gehalten wird.

21. Verfahren zur Herstellung eines Reifens mittels eines Kernes, der mindestens teilweise eine Herstellungsform für einen Reifen definiert, wobei der Kern folgendes aufweist:
• eine Vielzahl von Bestandteilen, die jeweils Querflächen aufweisen, wobei die genannten Bestandteile in Umfangsrichtung benachbart sind und Seite an Seite angeordnet sind, die genannten Querflächen mindestens eines Bestandteils radial zur Außenseite des Kernes hin konvergieren, jedes Bestandteil mit Verriegelungsteilen versehen ist und jedes Bestandteil versehen ist mit Mitteln zur Festlegung bezüglich einer
• Felge, die in Umfangsrichtung durchgeht,
wobei das genannte Verfahren darin besteht, daß der Kern derart vorab zusammengebaut ist, daß die Anordnung der Bestandteile auf der Felge positioniert ist, und daß der Kern von der einen Seite der Felge her von einem Greifer ergriffen ist, **dadurch gekennzeichnet, daß**, während der Kern durch eine erste zangenarige Aufnahme gehalten ist,
• von der anderen Seite der Felge her mittels eines anderen Greifers eine zweite, zangenartige Aufnahme der Bestandteile und der Felge derart bewirkt wird, daß die Bestandteile bezüglich der Felge festgelegt werden,
• die erste, zangenartige Aufnahme freigesetzt wird,
• der genannte Kern in Drehung um seine Achse mittels des anderen Greifers versetzt wird, um Kautschukbänder um den Kern herumzuwikkeln und um Verstärkungen auf gewünschte Stellen entsprechend der Architektur des genannten Reifens aufzulegen,
• der Kern mittels eines Greifers von der anderen Seite her als der des Greifers ergriffen wird, der die zweite zangenartige Aufnahme bewirkt,
wobei man eine dritte, zangenartige Aufnahme einerseits der Bestandteile und andererseits der Felge derart bewirkt, daß die Bestandteile bezüglich der Felge festgelegt werden,
• die zweite, zangenartige Aufnahme freigesetzt wird, und
• der genannte Kern axial mittels des genannten Greifers in Bewegung versetzt wird, der die dritte, zangenartige Aufnahme bewirkt, um den Kern, der einen rohen Reifen trägt, zu entnehmen.

22. Verfahren zum Zerlegen eines Kernes aus dem Inneren eines Reifens, wobei der genannte Kern mindestens teilweise eine Herstellungsform für einen Reifen definiert, und der Kern folgendes aufweist:
• eine Vielzahl von Bestandteilen, die jeweils Querflächen haben, wobei die genannten Bestandteile in Umfangsrichtung benachbart sind und Seite an Seite angeordnet sind, die genannten Querflächen mindestens eines Bestandteils radial zur Außenseite des Kernes hin konvergieren, jedes Bestandteil mit Verriegelungsteilen versehen ist und jedes Bestandteil mit Mitteln zur radialen Festlegung bezüglich einer
• Felge versehen ist, die in Umfangsrichtung durchgeht, und
• Sperrbereiche, die jeweils auf der Felge und auf jedem der Bestandteile angeordnet sind, wobei der genannte Kern dazu bestimmt ist, mit mindestens einem Greifer des genannten Kerns zusammenzuwirken, der genannte Greifer ein Sperrorgan aufweist, das genannte Sperrorgan ausfahrbar ist, um mit den genannten Sperrbereichen zusammenzuwirken, damit die Bestandteile axial auf der Felge festgelegt werden und einfahrbar sind, um die genannten Bestandteile freizusetzen, **dadurch gekennzeichnet, daß** :
das genannte Zerlegeverfahren darin besteht, während der Kern den Reifen trägt und der genannte Kern in Eingriff mit einem Greifer steht, der die Bestandteile und die Felge sperrt,
• jedes der Bestandteile zu ergreifen,
• die Sperrmittel der Bestandteile bezüglich des Greifers einzuziehen, ohne die Sperrmittel der Felge bezüglich des Greifers freizusetzen,
• axial die Felge von der Anordnung der Bestandteile zur Seite des genannten Greifers zu entfernen,
• jedes der Bestandteile radial im Inneren des freien Raums unter den Wülsten des Reifens zu versetzen und sie dann axial zu versetzen, indem man mit dem oder den der Bestandteile beginnt, deren genannte Querflächen radial auf der Außenseite des Kernes konvergieren, während man den über dem Kern hergestellten Reifen durch die Außenoberfläche des Reifens spätestens von dem Augenblick an ergreift, in dem er nicht mehr durch bestimmte der Bestandteile an Ort und Stelle gehalten werden kann, und
• den genannten Reifen zu entnehmen.
